# EUROPEAN PATENT SPECIFICATION

(11) **EP 1 641 897 B1**
(45) Date of publication and mention of the grant of the patent: **16.02.2011**
(21) Application number: 04741953.6
(22) Date of filing: 02.07.2004
(51) Int. Cl.: C10G 2/00, C10G 47/00, C10G 65/12

(54) **PROCESS TO PREPARE A FISCHER-TROPSCH PRODUCT**
VERFAHREN ZUR HERSTELLUNG EINES FISCHER-TROPSCH-PRODUKTS
PROCEDE POUR PREPARER UN PRODUIT PAR SYNTHESE DE FISCHER TROPSCH

(30) Priority: 04.07.2003 EP 03291660
(43) Date of publication of application: 05.04.2006
(73) Proprietor: Shell Internationale Research Maatschappij B.V., 2596 HR The Hague (NL)
(72) Inventor: DIERICKX, Jan, Lodewijk, Maria, NL-1031 CM Amsterdam (NL); HOEK, Arend, NL-1031 CM Amsterdam (NL); KUEH, Lip, Piang Shell MDS (Malaysia) Sdn Bhd, 97008 Bintulu Sarawak (MY)
(86) International application number: PCT/EP2004/051347
(87) International publication number: WO 2005/005575

(56) References cited:
- US-A1- 2002 173 556
- US-B1- 6 375 830

## Description

The present invention is directed to a process to prepare base oils or the intermediate waxy raffinate product in a high yield from a Fischer-Tropsch synthesis product.

Such processes are known from WO-A-9941332, US-A-6080301, EP-A-0668342, US-A-6179994 WO-A02/070630 or WO-A-02070629. These processes all comprise some kind of hydroisomerisation of the Fischer-Tropsch synthesis product followed by a dewaxing step of the higher boiling fraction obtained in said hydroisomerisation.

WO-A-02070629, for example, describes a process wherein the C5 plus fraction of a Fischer-Tropsch synthesis product is first subjected to a hydrocracking/hydroisomerisation step in the presence of a catalyst consisting of platinum on an amorphous silica-alumina carrier. The effluent of this conversion step is separated into middle distillate products and a base oil precursor fraction, also referred to as a waxy Raffinate product, and a higher boiling fraction. The base oil precursor fraction is catalytically dewaxed in the presence of a platinum-ZSM-5 based catalyst and the heavy fraction is recycled to the hydrocracking/hydroisomerisating step.

Although such a process will yield excellent quality base oils there is room for improvement. Especially the quality and the yield of the intermediate waxy Raffinate product may be improved. The present invention aims at
(a) subjecting a Fischer-Tropsch derived product having a weight ratio of compounds boiling above 540 °C and compounds boiling between 370 and 540 °C of greater than 2 to a hydroconversion step and
(b) fractionating the effluent of step (a) to obtain products boiling in the fuels range and a waxy raffinate product boiling between 350 and 600 °C.

Applicants have found that by subjecting such a relatively heavy Fischer-Tropsch derived product a higher yield to the waxy Raffinate product on feed to step (a) is obtained and wherein the quality of the waxy Raffinate is improved. It has been found that the wax content in the waxy Raffinate is reduced, as expressed in its cold flow properties like pour point and cloud point, making it a better base oil precursor feedstock. Dewaxing such a waxy Raffinate to base oils is more simple and more efficient.

The Fischer-Tropsch derived product will comprise a Fischer-Tropsch synthesis product. With a Fischer-Tropsch synthesis product is meant the product directly obtained from a Fischer-Tropsch synthesis reaction, which product may optionally have been subjected to a distillation and/or hydrogenation step only. The Fischer-Tropsch synthesis product can be obtained by well-known processes, for example the so-called commercial Sasol process, the Shell Middle Distillate Process or by the non-commercial Exxon process. These and other processes are for example described in more detail in EP-A-776959, EP-A-668342, US-A-4943672, US-A-5059299, WO-A-9934917 and WO-A-9920720. Typically these Fischer-Tropsch synthesis products will comprise hydrocarbons having 1 to 100 and even more than 100 carbon atoms. This hydrocarbon product will comprise normal paraffins, iso-paraffins, oxygenated products and unsaturated products. The feed to step (a) or any fractions obtained in step (a) may be hydrogenated in order to remove any oxygenates or unsaturated products.

The weight ratio of compounds boiling above 540 °C and compounds boiling between 370 and 540 °C in the feed to step (a) is greater than 2, preferably greater than 2.5, even more preferably greater than 3. The T10wt% recovery point of the Fischer-Tropsch derived product is preferably below 400 °C. Such a feed may be prepared by separating from the Fischer-Tropsch synthesis product part or all of the paraffin fraction boiling between 370 and 540 °C and/or adding a Fischer-Tropsch derived fraction comprising compounds boiling above 540 °C to the Fischer-Tropsch synthesis product. With boiling predominately between or above a certain value is meant that at least 80 wt% of said fraction, preferably at least 90 wt% of said fractions boils between or above the cited value.

The separated paraffin fraction boiling between 370 and 540 °C may be advantageously be sold as a paraffin wax or used as feed to prepare a base oil by means of dewaxing processes as described in for example EP-A-1204723. Before the dewaxing step the fraction may suitable be subjected to a hydroisomerisation step such as described in or EP-A-776959.

The fraction boiling predominantly above 540 °C may be a paraffin wax product having a congealing point of greater than 90 °C, preferably above 95 °C as isolated from a Fischer-Tropsch synthesis product.

The invention is also related to a process to prepare simultaneously two or more grades of a paraffin wax having a congealing ranging from 30 to 120 °C and a waxy Raffinate product by
(i) subjecting part of the Fischer-Tropsch synthesis product to a hydrogenation step to remove oxygenates and olefins from the Fischer-Tropsch product;
(ii) isolating from the hydrogenated Fischer-Tropsch product two or more wax grades, wherein at least one grade has a congealing point between 30 and 80 °C and at least one heavy grade having a congealing point of above 90 °C, preferably above 95 °C
(iii) mixing part or all of the heavy wax with another part of the Fischer-Tropsch synthesis product to obtain the Fischer-Tropsch, derived product for use in step (a).

The process of the present invention is especially advantageous when a substantial part, preferably more than 10 wt%, more preferably more than 30wt% and even more preferably more than 50 wt% of the Fischer-Tropsch synthesis product as used in step (i) boils above 550 °C. An example of a suitable process which may prepare such a heavy Fischer-Tropsch synthesis product is described in WO-A-9934917 and in AU-A-698392. When such a product is used in the above process less of the 370-540 °C fraction has to be separated from said Fischer-Tropsch synthesis product and/or less additional 540 °C plus material has to be added to obtain the same desired weight fraction. Or alternatively an even higher weight fraction is achievable thereby benefiting even more from the advantages of the present invention.

In step (a) the Fischer-Tropsch derived feed is subjected to a hydroconversion step to yield the waxy Raffinate product. Step (a) is performed in the presence of hydrogen and a catalyst, which catalyst can be chosen from those known to one skilled in the art as being suitable for this reaction. Catalysts for use in step (a) typically are amorphous catalysts comprising an acidic functionality and a hydrogenation/dehydrogenation functionality. Preferred acidic functionality's are refractory metal oxide carriers. Suitable carrier materials include silica, alumina, silica-alumina, zirconia, titania and mixtures thereof. Preferred carrier materials for inclusion in the catalyst for use in the process of this invention are silica, alumina and silica-alumina. A particularly preferred catalyst comprises platinum supported on a silica-alumina carrier. If desired, but generally not preferred because of environmental reasons, the acidity of the catalyst carrier may be enhanced by applying a halogen moiety, in particular fluorine or chlorine to the carrier. Examples of suitable hydrocracking/hydroisomerisation processes and suitable catalysts are described in WO-A-200014179, EP-A-532118 and the earlier referred to EP-A-776959.

Preferred hydrogenation/dehydrogenation functionality's are Group VIII non-noble metals, for example nickel as described in WO-A-0014179, US-A-5370788 or US-A-5378348 and more preferably Group VIII noble metals, for example palladium and most preferably platinum. The catalyst may comprise the hydrogenation/dehydrogenation active component in an amount of from 0.005 to 5 parts by weight, preferably from 0.02 to 2 parts by weight, per 100 parts by weight of carrier material. A particularly preferred catalyst for use in the hydroconversion stage comprises platinum in an amount in the range of from 0.05 to 2 parts by weight, more preferably from 0.1 to 1 parts by weight, per 100 parts by weight of carrier material. The catalyst may also comprise a binder to enhance the strength of the catalyst. The binder can be non-acidic. Examples are clays and other binders known to one skilled in the art. Preferably the catalyst is substantially amorphous, meaning that no crystalline phases are present in the catalyst. Thus catalysts comprising-molecular sieves, such as zeolite beta are excluded because they generally give rise to excessive heavy ends cracking instead of the desired isomerisation reaction.

In step (a) the Fischer-Tropsch derived feed is contacted with hydrogen in the presence of the catalyst at elevated temperature and pressure. The temperatures typically will be in the range of from 175 to 380 °C, preferably higher than 250 °C and more preferably from 300 to 370 °C. The pressure will typically be in the range of from 10 to 250 bar and preferably between 20 and 80 bar. Hydrogen may be supplied at a gas hourly space velocity of from 100 to 10000 Nl/l/hr, preferably from 500 to 5000 Nl/l/hr. The hydrocarbon feed may be provided at a weight hourly space velocity of from 0.1 to 5 kg/l/hr, preferably higher than 0.5 kg/l/hr and more preferably lower than 2 kg/l/hr. The ratio of hydrogen to hydrocarbon feed may range from 100 to 5000 Nl/kg and is preferably from 250 to 2500 Nl/kg.

The conversion in step (a) as defined as the weight percentage of the feed boiling above 370 °C which reacts per pass to a fraction boiling below 370 °C is preferably at least 20 wt%, more preferably at least 25 wt%, preferably not more than 80 wt%, more preferably not more than 65 wt% and even more preferably not more than 50 wt%.

The waxy Raffinate product may be subsequently be dewaxed to a base oil by means of generally known solvent or catalytic dewaxing processes as described in for example applicants EP-A-1366135 or EP-A-1366134. The Waxy Raffinate product may also be used in a traditional refinery environment to enhance the base oil production from a mineral oil feedstock. Because the Waxy Raffinate has a relatively low pour point of below 40 °C, preferably below 35 °C and even more preferably below 30 °C it is easily transported by for examples ships to overseas refineries nearer the end costumer. Suitable the Waxy Raffinate is added to a mineral oil based feed of a catalytic dewaxing unit in order to enhance for example the viscosity index of the resultant base oil.

The invention will be illustrated by the below Examples.

### Example 1.

Feed 2 of Table 1 was subjected to a hydrocracking step wherein the feed was contacted with a 0.8 wt% platinum on amorphous silica-alumina carrier. The conditions in the hydrocracking step were: a feed Weight Hourly Space Velocity (WHSV) of 1.0 kg/l.h, no recycle, and hydrogen gas rate = 1000 Nl/kg feed, total pressure = 32 bar. The reactor temperature as listed in Table 2. The hydrocracker effluents were analysed and the yields and properties for the waxy Raffinate product are listed in Table 2.

**Table 1**

| Sample | Fischer-Tropsch derived product 1 (feed 1) | Fischer-Tropsch derived product 2 (feed 2) |
|---|---|---|
| | (% weight fraction boiling below listed boiling point) (% weight) | |
| 370°C | 17.9 | 18.1 |
| 540°C | 46.3 | 38.2 |
| | Weight ratio of compounds boiling above 540°C and compounds boiling between 370°C and 540°C | |
| 540°C+ / (370°C-540°C) | 1.9 | 3.1 |

### Comparative experiment A

Example 1 was repeated with Feed 1 of Table 1. The results are listed in Table 2.

**Table 2**

| Example | 1 | 2 |
|---|---|---|
| Reactor Temperature, °C | 333 | 336 |
| Fraction boiling below 370 °C | 57.3 | 57.2 |
| Fraction boiling between 370 and 540 °C | 20.4 | 21.8 |
| Pour point of fraction boiling between 370 and 540 °C (°C) | +30°C | +27°C |
| Cloud point of fraction boiling between 370 and 540 °C (°C) | +43°C | +38°C |

As can be seen by comparing the results from feed 2 in Example 1 and the comparative experiment on feed 1, is that the Waxy Raffinate yield on Fischer-Tropsch derived product (feed) is significantly higher (7 % relative increase) for the feed 2 according to the present invention (= 21.8 wt%) as compared to a situation wherein the prior art feed 1 is used (= 20.4 wt%). Both Pour and Cloud Points of the Waxy Raffinate fraction are significantly better for the Waxy Raffinate derived from feed 2 (PP = +27°C and CP = +38°C), as compared to the Waxy Raffinate derived from the prior art feed 1 (PP = +30°C and CP = +43°C).

## Claims

1. Process to prepare a waxy Raffinate product by performing the following steps:
(a) subjecting a Fischer-Tropsch derived product having a weight ratio of compounds boiling above 540 °C and compounds boiling between 370 and 540 °C of greater than 2 to a hydroconversion step and
(b) fractionating the effluent of step (a) to obtain products boiling in the fuels range and a waxy raffinate product boiling between 350 and 600 °C.

2. Process according to claim 1, wherein the weight ratio of compounds boiling above 540 °C and compounds boiling between 370 and 540 °C of greater than 2.5.

3. Process according to any one of claims 1-2, wherein the T10wt% recovery point of the Fischer-Tropsch derived product is below 400 °C.

4. Process according to any one of claims 1-3, wherein the Fischer-Tropsch derived product in step (a) is prepared by separating from a Fischer-Tropsch synthesis product part or all of the paraffin fraction boiling between 370 and 540 °C.

5. Process according to any one of claims 1-4, wherein the Fischer-Tropsch derived product in step (a) is prepared by adding a Fischer-Tropsch derived fraction comprising compounds boiling above 540 °C to a Fischer-Tropsch synthesis product.

6. Process to prepare simultaneously two or more grades of a paraffin wax having a congealing ranging from 30 to 120 °C and a waxy Raffinate product by
(i) subjecting part of the Fischer-Tropsch synthesis product to a hydrogenation step to remove oxygenates and olefins from the Fischer-Tropsch product;
(ii) isolating from the hydrogenated Fischer-Tropsch product two or more wax grades, wherein at least one grade has a congealing point between 30 and 80 °C and at least one heavy grade having a congealing point of above 90 °C, preferably above 95 °C
(iii) mixing part or all of the heavy wax with another part of the Fischer-Tropsch synthesis product to obtain the Fischer-Tropsch product having a weight ratio of compounds boiling above 540 °C and compounds boiling between 370 and 540 °C of greater than 2 to be used in step (a) of the process of claim 1 - 5.

7. Process to prepare a base oil by performing the process according to any one of claims 1-6 and performing an additional dewaxing step using the waxy Raffinate as feed.

## Patentansprüche

1. Verfahren zur Herstellung eines wachsartigen Raffinatprodukts mittels Durchführens der folgenden Schritte:
(a) Unterwerfen eines aus Fischer-Tropsch stammenden Produkts mit einem Gewichtsverhältnis von Verbindungen, welche über 540° C sieden, zu Verbindungen, welche von 370 bis 540° C sieden, von mehr als zwei unter einen Hydroumwandlungsschritt, und
(b) Fraktionieren des Abstroms aus Schritt (a), um Produkte, welche im Treibstoffbereich sieden, und ein wachsartiges Raffinatprodukt, welches bei 350 bis 600°C siedet, zu erhalten.

2. Verfahren nach Anspruch 1, wobei das Gewichtsverhältnis von über 540° C siedenden Verbindungen zu zwischen 370 und 540° C siedenden Verbindungen mehr als 2,5 beträgt.

3. Verfahren nach einem der Ansprüche 1 bis 2, wobei der T10 Gew.-% Gewinnungspunkt des aus Fischer-Tropsch stammenden Produkts unter 400° C liegt.

4. Verfahren nach einem der Ansprüche 1 bis 3, wobei das aus Fischer-Tropsch stammende Produkt im Schritt (a) durch Abtrennen von einem Teil oder der gesamten Paraffinfraktion, welche zwischen 370 und 540° C siedet, von einem Fischer-Tropsch-Syntheseprodukt hergestellt wird.

5. Verfahren nach einem der Ansprüche 1 bis 4, wobei das aus Fischer-Tropsch stammende Produkt im Schritt (a) durch Zusetzen einer aus Fischer-Tropsch stammenden Fraktion, umfassend Verbindungen, welche über 540° C sieden, zu einem Fischer-Tropsch-Syntheseprodukt hergestellt wird.

6. Verfahren zur gleichzeitigen Herstellung von zwei oder mehr Qualitäten eines Paraffinwachses mit einem Erstarrungsbereich von 30 bis 120° C und einem wachsartigen Raffinatprodukt durch
(i) Unterwerfen eines Teils des Fischer-Tropsch-Syntheseprodukts unter einen Hydrierungsschritt, um Oxygenate und Olefine aus dem Fischer-Tropsch-Produkt zu entfernen;
(ii) Isolieren von zwei oder mehr Wachsqualitäten aus dem hydrierten Fischer-Tropsch-Produkt, wobei wenigstens eine Qualität einen Erstarrungspunkt von 30 bis 80°C und wenigstens eine schwere Qualität einen Erstarrungspunkt über 90° C, vorzugsweise über 95° C, besitzt;
(iii) Mischen von einem Teil oder dem gesamten schweren Wachs mit einem weiteren Teil des Fischer-Tropsch-Syntheseprodukts, um das Fischer-Tropsch-Produkt mit einem Gewichtsverhältnis von Verbindungen, welche über 540°C siedend, zu Verbindungen, welche zwischen 370 und 540°C sieden, von mehr als 2 zu erhalten, zur Verwendung im Schritt (a) des Verfahrens der Ansprüche 1 bis 5.

7. Verfahren zur Herstellung eines Grundöls durch Durchführen des Verfahrens nach einem der Ansprüche 1 bis 6 und Durchführen eines zusätzlichen Entwachsungsschritts unter Verwendung des wachsartigen Raffinats als Einsatzmaterial.

## Revendications

1. Procédé pour préparer un produit de raffinat cireux en effectuant les étapes consistant à :
(a) soumettre un produit dérivé de Fischer-Tropsch, ayant un rapport pondéral de composés bouillant à une température supérieure à 540 °C et de composés bouillant à une température comprise entre 370 et 540 °C supérieur à 2, à une étape d'hydroconversion et
(b) fractionner l'effluent dérivé de l'étape (a) pour obtenir des produits bouillant dans la plage des carburants et un produit de raffinat cireux bouillant à une température comprise entre 350 et 600 °C.

2. Procédé selon la revendication 1, dans lequel le rapport pondéral de composés bouillant à une température supérieure à 540 °C et de composés bouillant à une température comprise entre 370 et 540 °C, est supérieur à 2,5.

3. Procédé selon l'une quelconque des revendications 1 et 2, dans lequel le point de collecte T10 (% en poids) du produit dérivé de Fischer-Tropsch présente une valeur inférieure à 400 °C.

4. Procédé selon l'une quelconque des revendications 1 à 3, dans lequel le produit dérivé de Fischer-Tropsch obtenu à l'étape (a) est préparé en séparant, à partir d'un produit de synthèse de Fischer-Tropsch, une partie ou la totalité de la fraction de paraffine bouillant à une température comprise entre 370 et 540 °C.

5. Procédé selon l'une quelconque des revendications 1 à 4, dans lequel le produit dérivé de Fischer-Tropsch issu de l'étape (a) est préparé en ajoutant une fraction dérivée de Fischer-Tropsch comprenant des composés bouillant à une température supérieure à 540 °C à un produit de synthèse de Fischer-Tropsch.

6. Procédé pour préparer simultanément deux qualités ou plus d'une cire paraffinique présentant une plage de solidification s'étendant de 30 à 120 °C et un produit de raffinat cireux, en mettant en oeuvre les étapes consistant à :
(i) soumettre une partie du produit de synthèse de Fischer-Tropsch à une étape d'hydrogénation dans le but d'éliminer les oxygénats et les oléfines du produit de Fischer-Tropsch ;
(ii) isoler, à partir du produit de Fischer-Tropsch hydrogéné, deux qualités de cire, ou plus, où au moins une qualité présente un point de solidification compris entre 30 et 80 °C et au moins une qualité de type lourd présente un point de solidification supérieur à 90 °C, de préférence supérieur de 95 °C ;
(iii) mélanger une partie ou la totalité de la cire lourde à une autre partie du produit de synthèse de Fischer-Tropsch de manière à obtenir le produit de Fischer-Tropsch présentant un rapport pondéral de composés bouillant à une température supérieure à 540 °C et de composés bouillant à une température comprise entre 370 et 540 °C supérieur à 2, pour une utilisation à l'étape (a) du procédé selon les revendications 1 à 5.

7. Procédé pour préparer une huile de base en mettant en oeuvre le procédé selon l'une quelconque des revendications 1 à 6, et en effectuant une étape de déparaffinage supplémentaire en utilisant le raffinat cireux tel qu'il est alimenté.
